Europäisches Patentamt

European Patent Office

Office européen des brevets

(11) Publication number: **0 345 055**
**A2**

# EUROPEAN PATENT APPLICATION

(21) Application number: **89305511.1**

(22) Date of filing: **01.06.89**

(51) Int. Cl.⁴: **F 01 B 11/00**

(30) Priority: **03.06.88 GB 8813088**

(43) Date of publication of application:
**06.12.89 Bulletin 89/49**

(84) Designated Contracting States: **CH DE GB LI**

(71) Applicant: **Bell, Andrew**
**"Braeside" Teapot Street**
**Morebattle By Kelso TD5 8QH (GB)**

(72) Inventor: **Bell, Andrew**
**"Braeside" Teapot Street**
**Morebattle By Kelso TD5 8QH (GB)**

(74) Representative: **Fitzpatrick, Alan James et al**
**Fitzpatricks 4 West Regent Street**
**Glasgow G2 1RS Scotland (GB)**

(54) Liquid piston internal combustion engine.

(57) A liquid piston internal combustion engine comprises two upright combustion chambers (1) interconnected at their lower ends by a U passage (2) containing a quantity of liquid (3) which is movable between the combustion chambers (1) in alternate cycles of operation of the combustion chambers (1). Each combustion chamber (1) has a head (4) closing the top thereof, means (5) for admitting air, means (6) for admitting fuel for combustion and means (7) for exhausting the products of combustion from the chamber (1). In the form illustrated, the quantity of liquid (3) is used itself as a piston. In an alternative, the quantity of liquid is used to link together hydraulically solid pistons movable in the combustion chambers.

Fig. 1

**Description**

## LIQUID PISTON INTERNAL COMBUSTION ENGINE:

This invention relates to a liquid piston internal combustion engine.

The ideal cycle efficiency of any heat engine depends primarily on the difference in temperatures at which heat is supplied to, and rejected from the working fluid. The greater the difference the higher the efficiency. Since in effect the minimum rejection temperature is fixed by the ambient conditions, the maximum temperature at which heat can be supplied to the working fluid determines the ideal cycle efficiency.

Currently the highest practical efficiences are achieved by large supercharged Diesel engines. This is because the major portion of the cycle takes place within the single location, i.e. the cylinder, which is not exposed to the maximum temperature throughout the cycle but is cooled by the lower temperatures prevailing during parts of the cycle. Higher maximum temperatures and pressures, and hence higher efficiencies can therefore be achieved than in, for instance, the gas turbine where the first stages of the turbine are continually exposed to the maximum cycle temperature.

The efficiency of the Diesel engine can be raised by increasing the pressure of air during the inlet portion of the cycle (supercharging) which raises the compression pressure at the end of the compression stroke, hence the combustion pressure and temperature and therefore the ideal cycle efficiency.

Prototype engines were built in the period 1935 -1945 in which the supercharging was increased to the point where the power developed by the piston engine was just sufficient to provide supercharging, and the output power was obtained from an exhaust gas turbine utilising the energy of the high pressure exhaust from the piston engine. The piston engine acted solely as a gas generator. Such engines were built and run with very high efficiencies, but never became commercially successful because the pressure loads on the pistons and connecting rod top and bottom bearings, and the heat loads on the pistons and rings, caused by the high compression and combustion pressures and temperatures, were excessive.

Before 1945, the Germans had considerable success with high pressure 'free piston' compressors. In these combustion took place between a pair of pistons; the outer ends of these pistons compressed air in multi-stage air compression cylinders which also supplied the combustion air. All forces were transmitted directly to the compressor portions of the pistons without the need for any bearings oscillating or reciprocating linkage, although in some cases there was a light linkage to maintain a synchronism of the pistons. This arrangement was developed after 1945 into horizontal opposed piston gasifiers which developed no output power directly, but supplied exhaust gas under pressure to output gas turbines.

Because the two opposed pistons must work in unison it is not possible to operate such a system with a vertical cylinder, since one piston would be moving up when the other was moving down, making balance of forces nearly impossible. Any linkage to overcome this problem would re-introduce the problems of bearings etc. The prototypes developed had therefore horizontal cylinders which led to severe lubrication and wear problems, and although good fuel consumption was achieved, the lubricating oil consumption was excessive and the design was discontinued.

Liquid pistons were used in the Humphrey pumping gas engines in the early part of this century. They consisted of a vertical cylinder, closed at the top by a cylinder cover with air and gas inlet and exhaust valves and means of ignition; at the bottom the cylinder communicated with one leg of a water filled U shaped passage; the other end of the U formed a water column. Ignition of the air/gas mixture in the closed cylinder drove the water in the column upward and water was delivered either from the top of the column or by a valve from lower down the column. When combustion cylinder exhaust valve opened pressure on the column was released and the column fell back, forcing water up into the combustion cylinder compressing the air and gas admitted into the cylinder by the inlet and exhaust valves.

Such engines could burn any fuel; eliminate bearings and hence lubrication and bearing load problems; eliminate piston heat stress, piston speed and ring problems; and simplify material selection and manufacture; but had maximum compression pressures and hence temperatures limited by the effective height of the water column. They were also limited to pumping applications.

The main advantage of the invention is that compression pressures can be generated limited only by such factors as the avoidance of excessive temperatures.

According to the present invention there is provided a liquid piston internal combjustion engine, comprising two upright combustion chambers interconnected at their lower ends by a U passage for containing a quantity of liquid which is movable between the combustion chambers in alternate cycles of operation of the combustion chambers, each combustion chamber having a head closing the top thereof, means for admitting air and fuel for combustion, and means for exhausting the products of combustion from the chamber.

The quantity of liquid may be used itself as a piston. Such an engine avoids the use of highly stressed mechanical linkages such as crankshafts, crossheads, connecting rods and their associated bearings. Extra advantages are derived when the quantity of liquid is used to link together hydraulically solid pistons movable in the respective combustion chambers. The term "liquid piston" is intended to cover both forms.

The means of admission of air and fuel and exhaustion of gas may be either in the head or at lower levels in the connecting passage to give the best scavenging of the exhaust gas by the incoming air. In addition baffles could be fitted to improve this process.

Combustion air may be supplied at any suitable pressure above atmospheric by a blower or compressor.

Baffles may be fitted in the liquid spaces to reduce turbulence of the liquid.

Control of the means of air admission, fuel admission, fuel ignition and gas exhaustion may be initiated by sensors measuring the pressures, temperatures and position of the liquid surfaces in the chambers; the required action being computed by a micro-computer; and the means actuated electronically, hydraulically or pneumatically in accordance with the action decided by the micro-computer.

Part of the energy developed in one chamber by the combustion of the fuel would be utilised to compress the contents of the other chamber, the remainder would preferably be harnessed by exhausting the gases at pressure to a gas turbine driving an alternator or other useful load.

Alternatively the alternating movement of the liquid in the connecting U passage may be harnessed by a magneto-hydrodynamic generator to directly generate electrical current.

Alternatively the bottom horizontal portion of the connecting U passage may be restricted to form a Venturi. At each cycle additional liquid is drawn in at the restricted portion of the Venturi and ejected horizontally at the beginning of the subsequent curve of the U thus pumping the liquid from the low pressure of the Venturi suction to a higher pressure. The liquid pumped may be used for any purpose for which pumped liquid is normally employed.

Embodiments of the invention, will now be described, with reference to the accompanying schematic drawings, in which:

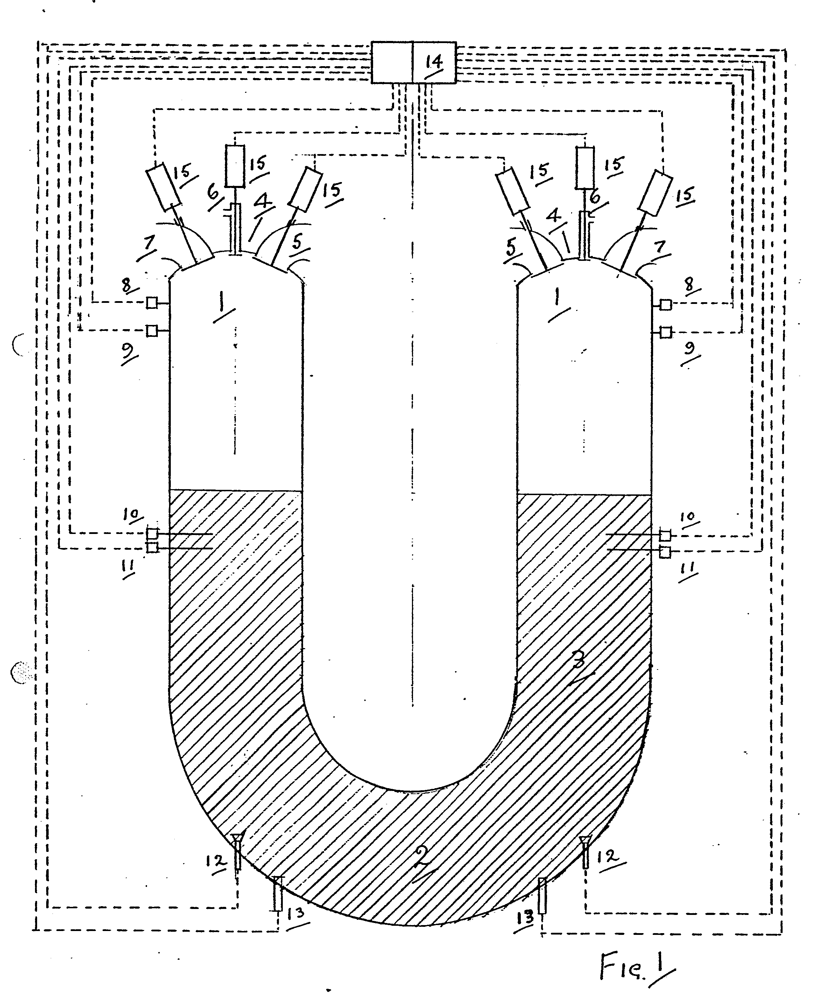

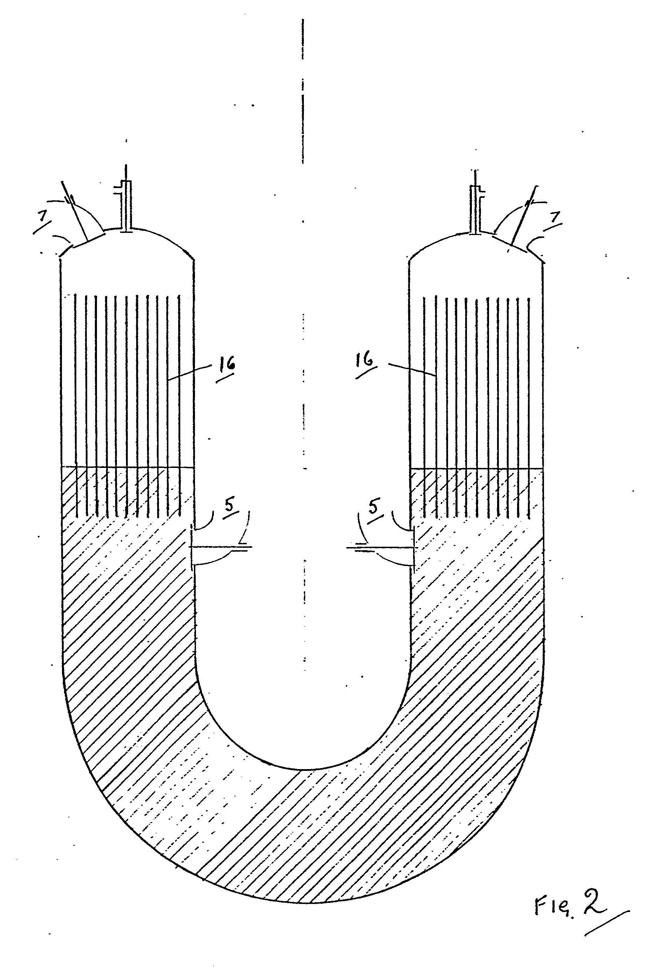

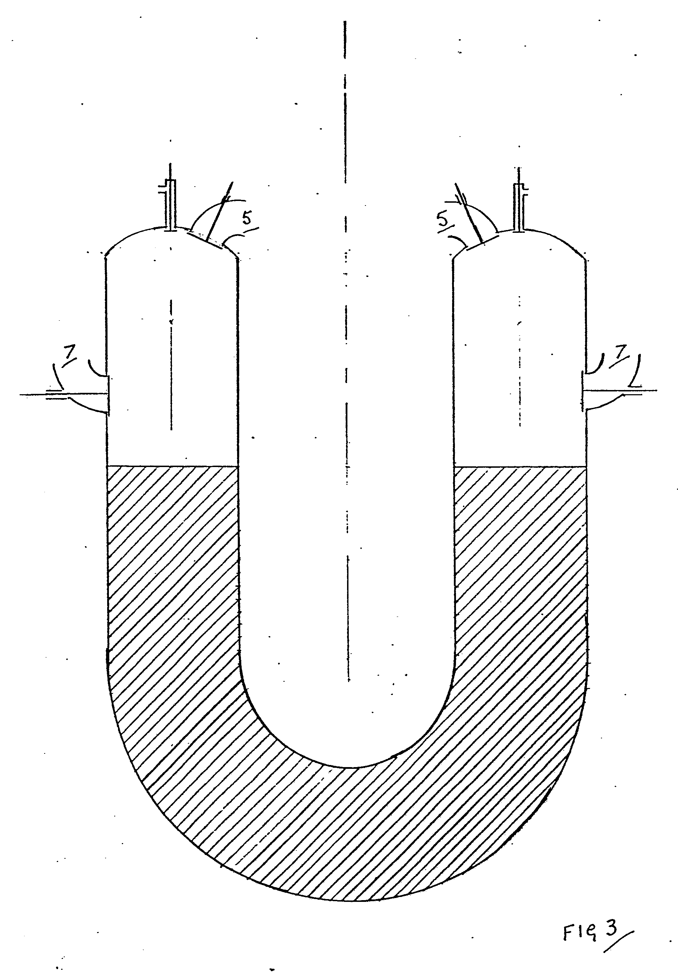

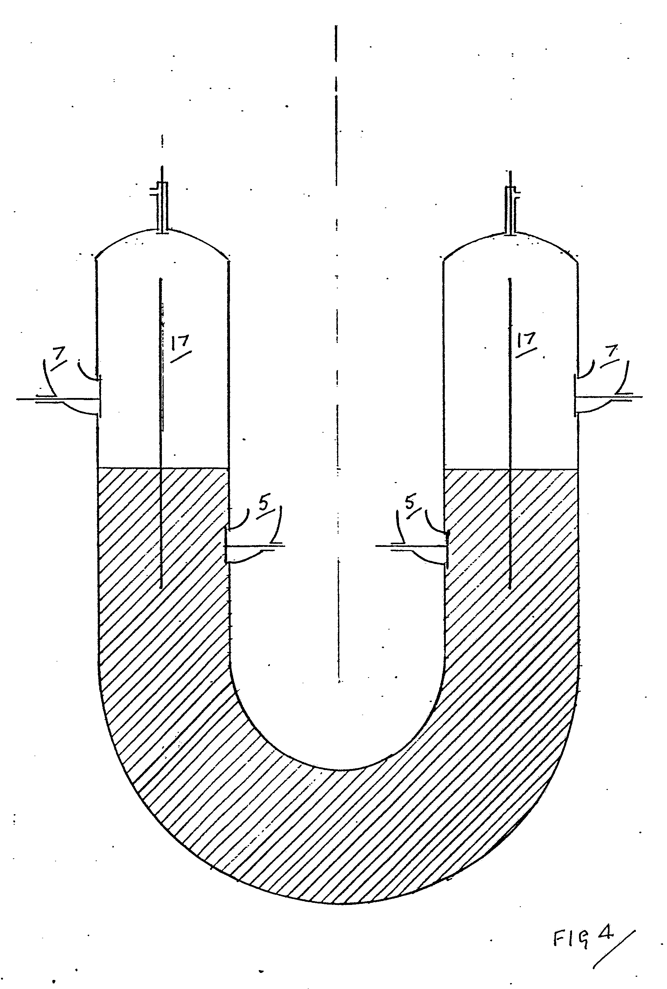

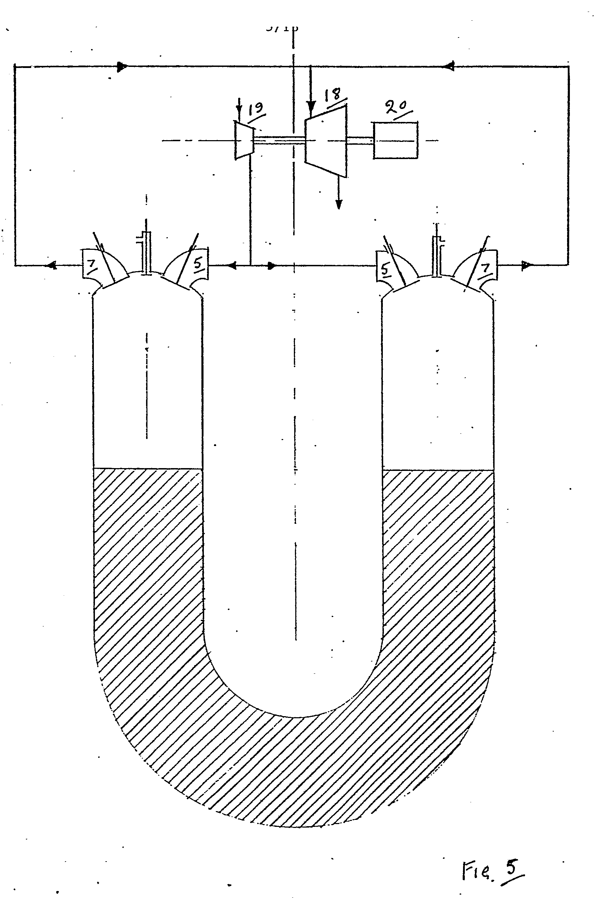

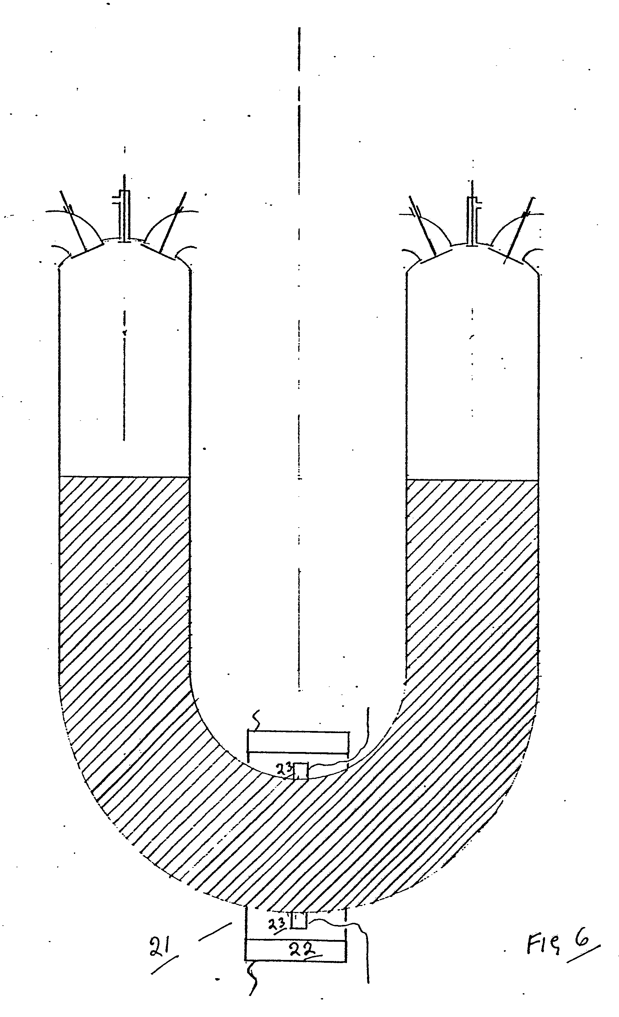

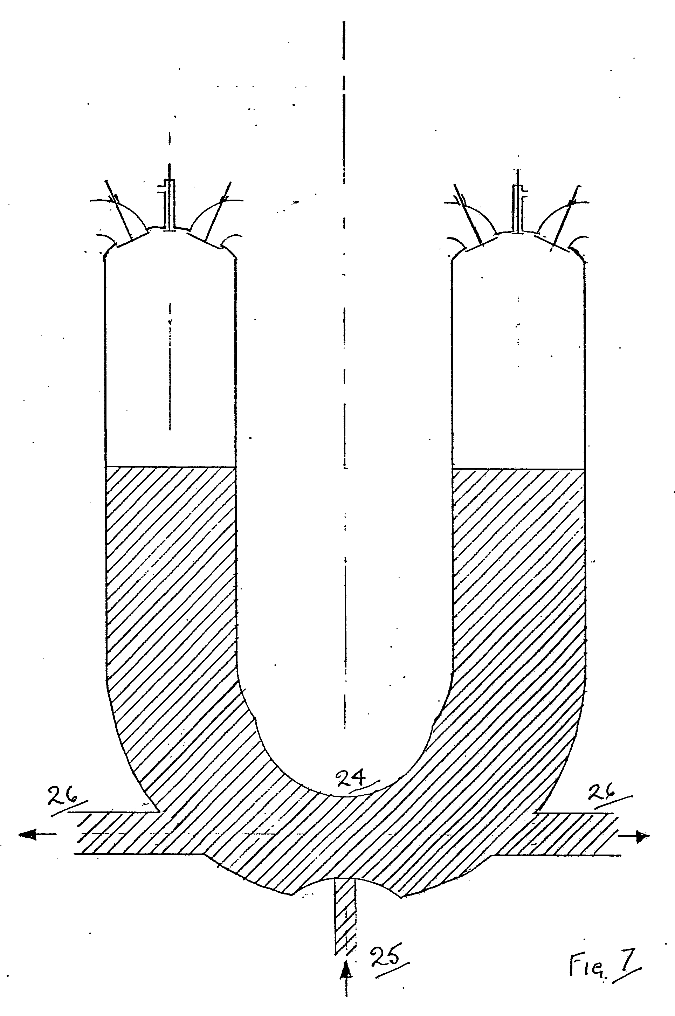

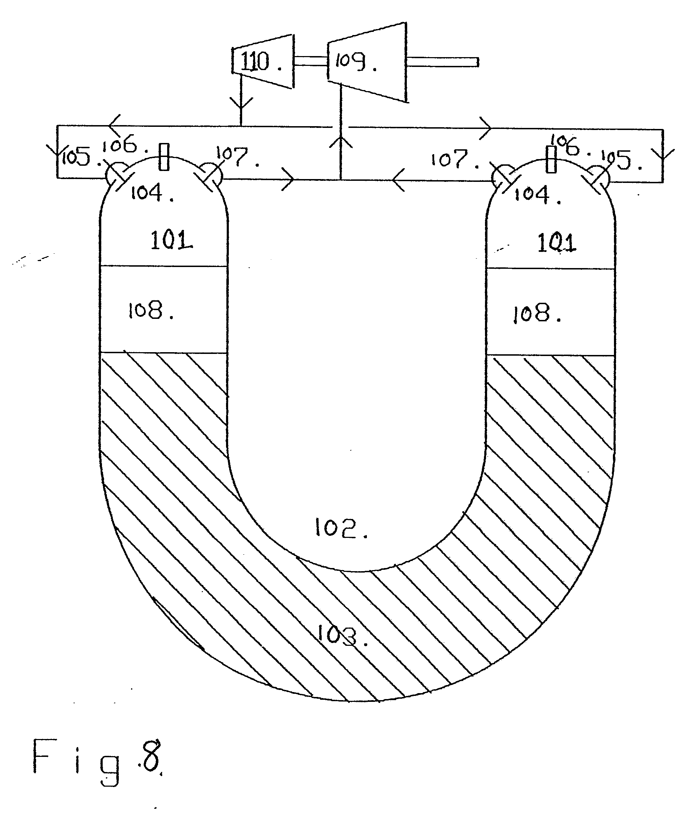

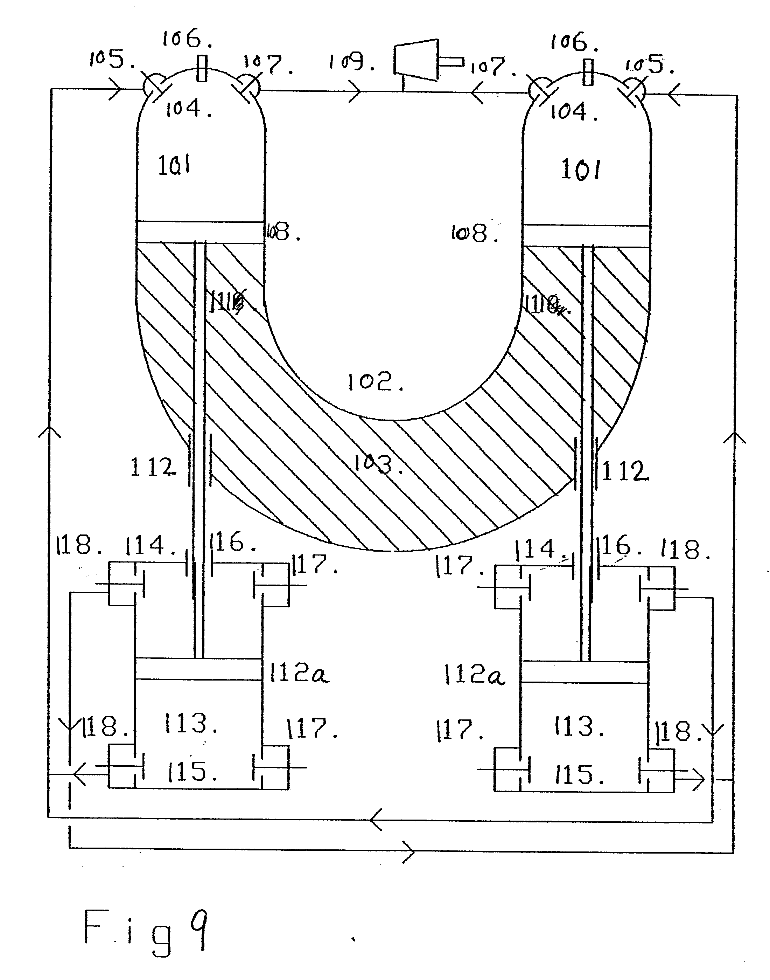

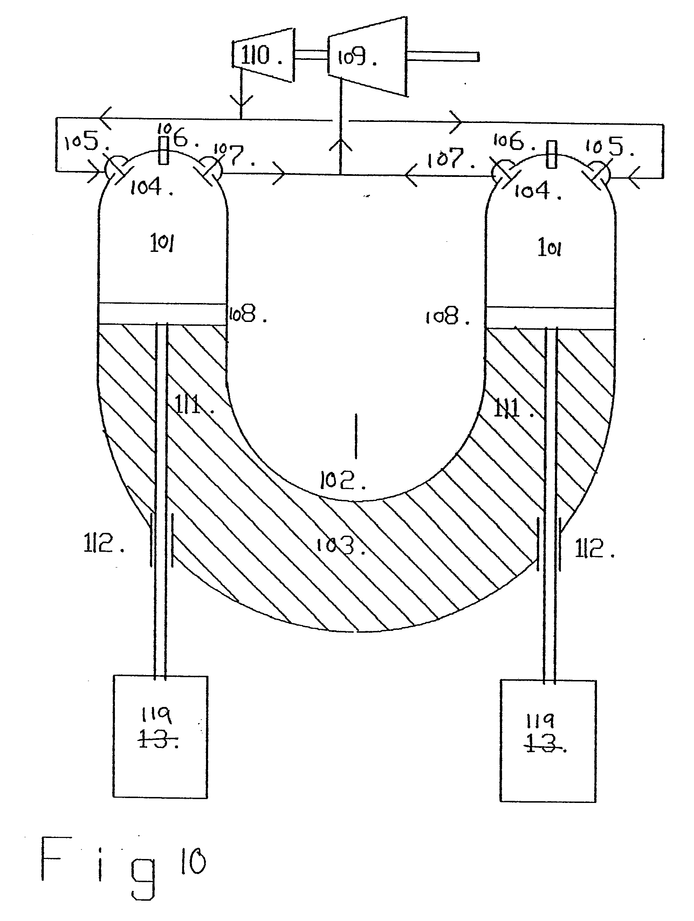

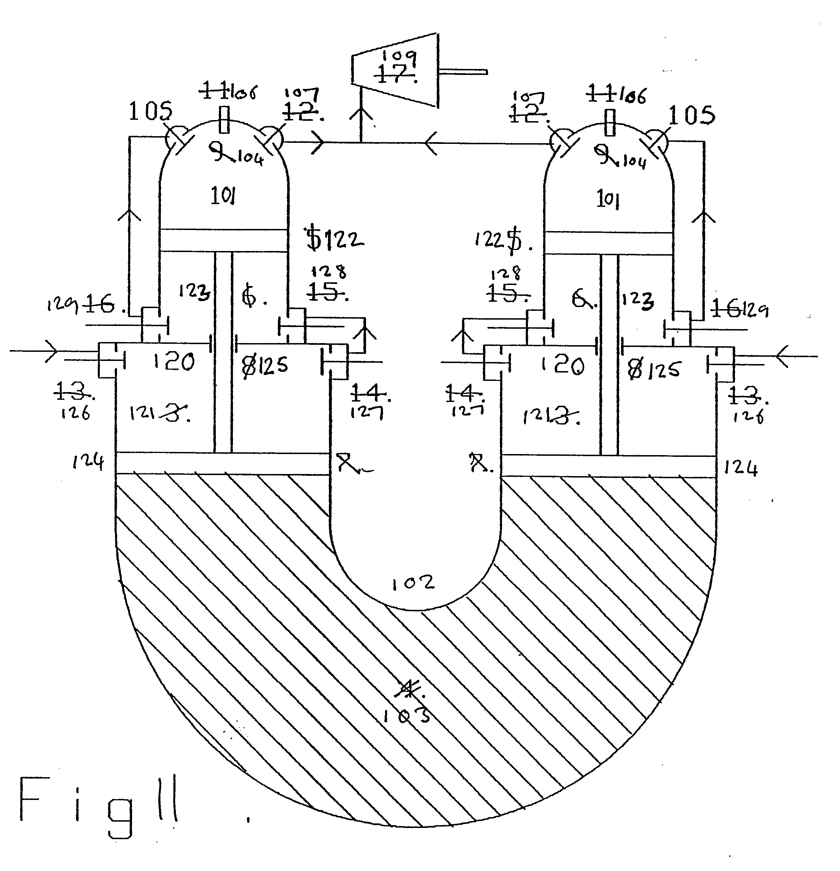

Fig. 1 is a sectional view of liquid piston internal combustion engine with various sensors and detectors;

Fig. 2 is a sectional view showing an alternative position of air inlets and turbulence reducing baffles;

Fig. 3 is a sectional view showing an alternative position of exhaust outlets;

Fig. 4 is a sectional view showing alternative positions for both air inlets and exhaust outlets and baffles to improve scavenging of exhaust gases by incoming combustion air;

Fig. 5 is a part-sectional and part-diagrammatic view showing a pair of chambers linked to a gas turbine;

Fig. 6 is a sectional view showing a magneto-hydrodynamic generator incorporated in the connecting U passage;

Fig. 7 is a sectional view showing a Venturi injector pump incorporated in the connection U passage;

Fig. 8 is a sectional view of an internal combustion engine having a pair of liquid linked solid pistons;

Fig. 9 is a sectional view of a modification of Fig. 8 including external pistons mechanically connected to the liquid linked pistons;

Fig. 10 is a sectional view of a further modification;

Fig. 11 is a sectional view of a variant of Fig, 9;

Fig. 12 is a sectional view of a further variant; and

Fig. 13 is a sectional view of a still further variant.

As shown in Fig, 1 two upright combustion chambers 1 are interconnected at their lower ends by a U passage 2 filled with liquid 3. The top of each combustion chamber is closed by a head 4 provided with means 5 of admission of combustion air, means 6 of admitting fuel, and means 7 of exhausting combustion gases, The means of admission of combustion air and fuel, and exhaustion of gases have actuators 15 under the control of a micro-computer 14. Pressure sensors 8 and temperature sensors 9 and liquid level detectors, such as capacitance 10, or conductance 11, or sonic 12, or radar 13 liquid level detectors, monitor the conditions inside the chambers 1 and the U passage 2 and transmit these values to the micro-computer 14 which decides the appropriate action and instructs the actuators 15 to open and close the means of admission of combustion air 5, fuel 6, and exhaustion of gases 7, accordingly.

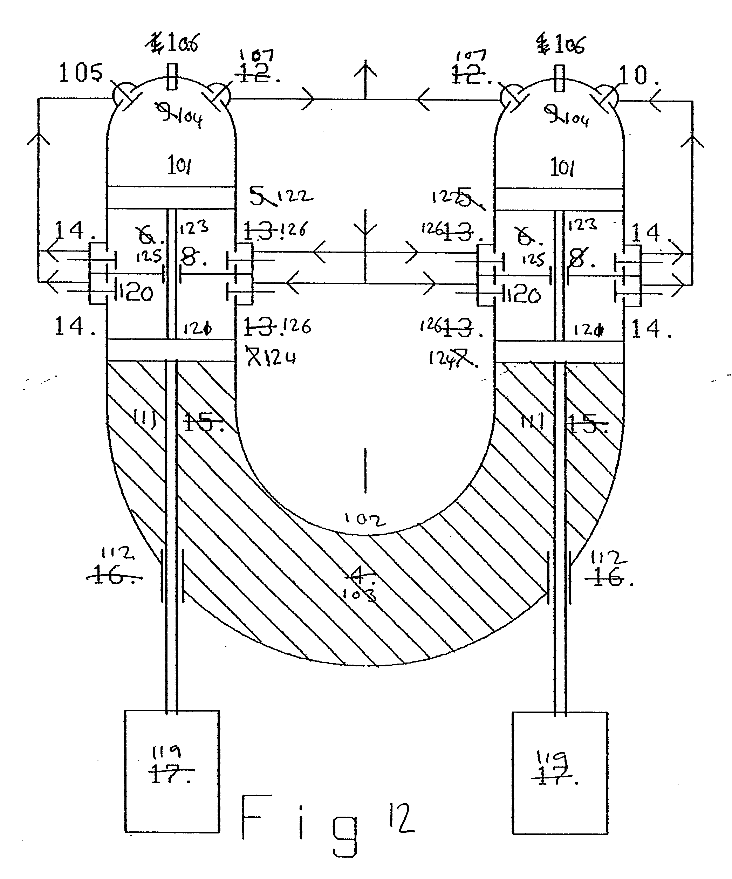

As shown in Fig. 2, the means of admission of combustion air are in the sides of the combustion chambers. Baffles 16 may be fitted within the combustion chambers to reduce turbulence.

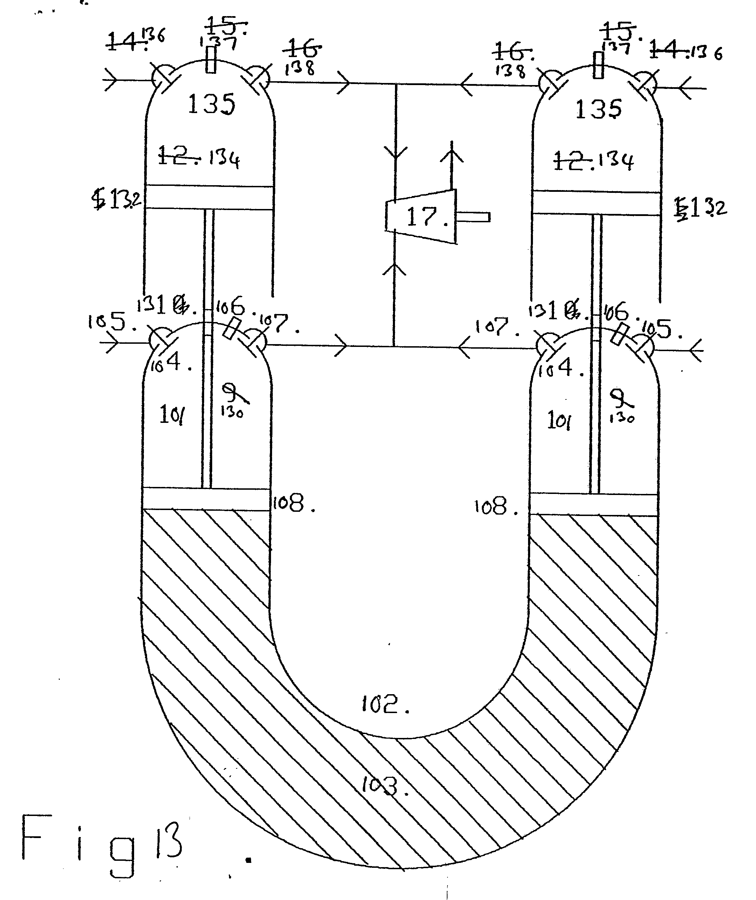

As shown in Fig. 3 the means 7 of exhaustion of gases may alternatively be in the side of the combustion chambers.

As shown in Fig. 4 both the means 5 and 7 of admission of combustion air and exhaustion of gases may alternatively be in the side of the combustion chambers. Baffles 17 may be fitted to direct the flow of combustion air and gases to improve removal of exhaust gases by incoming air.

Part of the energy released from the fuel burnt in one combustion chamber of a pair would be used to provide compression of the charge in the other chamber of the pair. The remaining energy may be preferentially harnessed, as shown in Fig. 5 by exhausting gas through the means 7 of exhaust at pressure to a gas turbine 18 which drives an electric generator 20 or other useful load. The gas turbine 18 may also drive a compressor 19 supplying combustion air to the combustion chambers through the means 5 of admission. Alternatively the compressor 19 may be independently driven.

Alternatively, as shown in Fig. 6, the remaining energy may be harnessed by a magnetohydrodynamic generator 21 in the connecting U liquid passage. In this case the liquid chosen is electrically conductive, for instance water containing sodium chloride or other suitable solute. Electrodes 23 pass an electrical current through the liquid and the movement of the electrical current bearing liquid through the surrounding coils of a field magnetic 22 generates an output electric current.

Alternatively as shown in Fig. 7 the remaining energy may be harnessed by an ejector pump in the connection U liquid passage. A suitable shaped restriction 24 is formed in the base of the U. An inlet 25 allows liquid to be drawn into the throat of the restriction by Venturi action engendered by the flow of liquid from one combustion chamber to the other. The liquid drawn is then discharged through outlets 26 at the base of the vertical portions of the U.

As shown in Fig. 8 two upright combustion chambers or cylinders 101 are interconnected at their lower ends by a U passage 102 filled with liquid 103. The top of each cylinder is closed by a head 104 provided with means 105 of admitting air for combustion, means 106 of injection of fuel, and means 107 of exhausting combustion gases. The gases in the upper part of each cylinder 101 are separated from the liquid in the lower part and the U by a piston 108 fitting within the cylinder closely enough to seal the gases from the liquid but free to slide within the cylinder; the motion of each piston would be transmitted to the other by the liquid 103. The combustion gases released by the means 107 would exhaust at elevated pressure to an exhaust turbine 109 which would provide output power and also drive a compressor 110 providing compressed combustion air to the means of admission 105.

As shown in Fig. 9 two upright combustion chambers or cylinders 101 are interconnected at their lower ends by a U passage 102 filled with liquid 103. The top of each cylinder is closed by a head 104 provided with means 105 of admitting air for combustion, means 106 of injection of fuel, and means 107 of exhausting combustion gases. The gases in the upper part of each cylinder 101 are separated from the liquid in the lower part and the U by a piston 108 fitting within the cylinder closely enough to seal the gases from the liquid but free to slide within the cylinder; the motion of each piston would be transmitted to the other by the liquid 103. The combustion gases released by the means 107 would exhaust at elevated pressure to an exhaust turbine 109 which would provide output power.

Tail rods 111 attached to the piston 108 would pass through sealing glands 112 in the bottom of the U 103. Pistons 112a attached to the tail rods 111 would slide within cylinders 113 closed by top 114 and bottom 115 covers. The tail rods 111 would pass through sealing glands 116 in the top covers 114. Each end of the cylinders 113 would be provided with means 117 of admission of air and means 118 of delivery of the air compressed in the cylinders to the means 105 of admission of combustion air to the combustion cylinders 101.

The piston rod could be provided with a second piston, acting within a second scavenge cylinder to deliver combustion air to the combustion cylinder. Such scavenge cylinders could be either double or single acting.

As shown in Fig, 10 two upright combustion chambers or cylinders 101 are interconnected at their lower ends by a U passage 102 filled with liquid 103. The top of each cylinder is closed by a head 104, provided with means 105 of admitting air for combustion, means 106 of injection of fuel, and means 107 of exhausting combustion gases. The gases in the upper part of each cylinder 101 are separated from the liquid in the lower part and the U by a piston 108 fitting within the cylinder closely enough to seal the gases from the liquid but free to slide within the cylinder; the motion of each piston would be transmitted to the other by the liquid 103. The combustion gases released by the means 107 would exhaust at elevated pressure to an exhaust turbine 109 which would drive a compressor 110 which would supply combustion air to the combustion cylinders 101 through the means of admission 105. Tail rods 111 attached to the pistons 108 would pass through sealing glands 112 in the bottom of the U 103. The tail rods 111 would drive loads 119 which could be the pistons of pumps or compressors or the armature of a linear alternator.

The piston rod could be used to drive a pump, compressor, or asynchronous linear alternator. Scavenge air would be provided by a blower powered either by a turbine driven by the exhaust of the combustion cylinders or by an electric motor.

As shown in Fig. 11 two upright combustion chambers or cylinders 101 are separated by a diaphragm 120 from the two lower cylinders 121 connected at their lower ends by a U shaped passage 102 filled with liquid 103. A close fitting piston 122 would slide in each upper cylinder 101 and would be connected by a piston rod 123 to a piston 124 sliding in each lower cylinder 121. The motion of each piston would be transmitted to the other by the liquid 103. The piston rods would pass through sealing glands 125 in the diaphragms 120 between the lower part of the upper cylinders and the upper part of the lower cylinders.

The upper cylinders would be closed at the top by cylinder heads 104 provided with means 105 of admitting combustion air, means 106 of injecting fuel, and means 107 of exhausting spent combustion gases.

The lower cylinders 121 would be provided with means 126 of admitting air, and means 127 of exhausting the air compressed in the space between the lower pistons 124 and the diaphragms 120 to the space between the diaphragms 120 and the top pistons 122 via means 128 of admission.

Air would be further compressed in this space and then released by means 129 to the means 105 of admission of combustion air to the upper cylinders. Exhaust gases would be released at elevated pressure and temperature by the means 107 to an output power turbine 109.

As shown in Fig, 12 two upright combustion chambers or cylinders 101 are separated by a diaphragm 120 from two lower cylinders 130 connected at their lower ends by a U shaped passage 102 filled with liquid 103. A close fitting piston 122 would slide in each upper cylinder 101 and would be connected by a piston rod 123 to a piston 124 sliding in each lower cylinder 121. The motion of each piston would be transmitted to the other by the liquid 103. The piston rods would pass through sealing glands 125 in the diaphragms 125 between the lower part of the upper cylinders and the upper part of the lower cylinders.

The upper cylinders would be closed at the top by cylinder heads 104 provided with means 105 of admitting combustion air, means 106 of injecting fuel, and means 107 of exhausting spent combustion gases. The lower cylinders 120 and the space between the upper pistons 122 and the diaphragms 125 would be provided with means 126 of admitting air, and means 127 of exhausting the air compressed in the space between the lower pistons 124 and the diaphragms 125 and the space between the diaphragms 125 and the top pistons 122 to the means 105 of admission of combustion air to the upper cylinders. Tail rods 111 attached to the lower pistons 124 would pass through sealing glands 112 in the bottom of the U and would drive loads 119 which could be the pistons of pumps or compressors or the armatures of linear alternators.

As shown in Fig. 13 two upright combustion chambers or cylinders 101 are interconnected at their lower ends by a U passage 102 filled with liquid 103. The top of each cylinder is closed by a head 104, provided with means 105 of admitting air for combustion, means 106 of injection of fuel, and means 107 of exhausting combustion gases. The gases in the upper part of each cylinder 101 are separated from the liquid in the lower part and the U by a piston 108 fitting within the cylinder closely enough to seal the gases from the liquid but free to slide within the cylinder; the motion of each piston would be transmitted to the other by the liquid 103. A piston rod 130 would be attached to each piston 108 and extend upward through a sealing gland 131 in the cylinder head 104, to a piston 132 sliding in an upper cylinder 133. The top of each upper cylinder 134 would be closed by a head 135 provided with means 136 of admitting air for combustion, means 137 of injection of fuel, and means 138 of exhausting combustion gases. The combustion gases released by the means 107 and 138 would exhaust at elevated pressure to an exhaust turbine 109 which would provide output power.

Air intake could be either naturally aspirated or supercharged by a blower driven by the power turbine, a separate turbo blower or by an electric motor.

In Figs. 9, 10, 12 and 13 cams or other sensors to operate the inlet, outlet and fuel admission valves can be operated by the piston rod where it is not enclosed. In alternative Fig. 11 cams or other sensors can be operated by the piston rod within the lower -scavenge-cylinder.

The above apparatus in accordance with the present invention provides a liquid piston internal combustion engine having two cylinders linked by a hydraulic U either acting directly on the surface of the liquid or with an interposed piston, and acting against each other so that the combustion pressure in one can be used to compress the charge in the other enabling very high "compression ratios" and hence efficiencies to be attained.

## Claims

1. A liquid piston internal combustion engine, comprising two upright combustion chambers interconnected at their lower ends by a U passage for containing a quantity of liquid which is movable between the combustion chambers in alternate cycles of operation of the combustion chambers, each combustion chamber having a head closing the top thereof, means for admitting air and fuel for combustion, and means for exhausting the products of combustion from the chamber.

2. An engine according to claim 1, wherein the quantity of liquid is used itself as a piston.

3. An engine according to claim 2, wherein the quantity of liquid is used to link together hydraulically solid pistons movable in the respective combustion chambers.

4. An engine according to Claim 3, wherein each piston movable in its combustion chamber is connected by a piston rod to an external piston movable in its own cylinder.

5. An engine according to claim 4, wherein the piston rod extends through a gland in the U passage.

6. An engine according to claim 4, wherein the piston rod extends through a gland in the head of the combustion chamber of its internal piston.

7. An engine according to claim 3, wherein the solid pistons are each arranged as a pair of piston members connected together by a piston rod extending through a gland in a diaphragm dividing two working chambers from each other.

8. An engine according to any preceding claim, wherein the exhaust from the combustion chambers is used to drive a turbine.

9. An engine according to one of claims 1 to 7, wherein a magnetohydrodynamic generator is incorporated in the U passage.

10. An engine according to any one of claims 1 to 7 wherein a Venturi injector pump is incorporated in the U passage.

Fig. 1

Fig. 2

FIG 3

FIG 4

Fig. 5

21    22    23    FIG 6

26

24

26

25

Fig. 7

Fig 8.

Fig 9

Fig 10

Fig 11.

Fig 12

Fig 13.